# NEUE EUROPÄISCHE PATENTSCHRIFT

(11) **EP 0 288 031 B2**
(45) Veröffentlichungstag und Bekanntmachung des Hinweises auf die Entscheidung über den Einspruch: **22.07.1998**
(45) Hinweis auf die Patenterteilung: 10.03.1993
(21) Anmeldenummer: 88106316.8
(22) Anmeldetag: 20.04.1988
(51) Int. Cl.: B01D 53/34, F23C 9/08

(54) **Verfahren und Feuerungsanlage zur Reduzierung von Stickoxidwerten bei öl- oder gasbetriebenen Feuerungsanlagen**
Process and combustion unit for reducing the nitrogen content in oil and gas fired combustion units
Procédé et installation de combustion pour réduire le contenu en oxyde d'azote dans des installations de combustion au mazout ou au gaz

(30) Priorität: 21.04.1987 DE 3713408
(43) Veröffentlichungstag der Anmeldung: 26.10.1988
(73) Patentinhaber: Max Weishaupt GmbH, D-88475 Schwendi (DE)
(72) Erfinder: Ahmadi-Dehaj, Behrouz, Dr. Ing., D-7958 Laupheim (DE)
(74) Vertreter: Flügel, Otto, Dipl.-Ing.

(56) Entgegenhaltungen:
- EP-A- 0 191 141
- CH-A- 592 846
- DE-C- 876 398
- FR-A- 2 484 277

## Beschreibung

Die Erfindung bezieht sich auf ein Verfahren zur Reduzierung von Stickoxiden-Werten (NOx-Werten) bei öl- oder gasbetriebenen Feuerungsanlagen durch Rückführung eines Teiles des Abgases in den Verbrennungsprozeß unter Verwendung eines Rezirkulationsgebläses sowie eine Feuerungsanlage zur Durchführung dieses Verfahrens. Ein derartiges Vorgehen ist beispielsweise aus der EP-A-191 141 bekannt.

Bei der Verfeuerung von fossilen Brennstoffen entstehen neben den anderen Verbrennungsprodukten auch Stickoxide NOx. Die Stickoxide im Abgas bestehen zu etwa 95 % aus Stickstoffmonoxid NO und etwa 5 % aus Stickstoffdioxid N0₂. Die Entstehungsmechanismen für NO sind allgemein bekannt und können durch die folgenden Vorgänge
- thermische NO-Bildung
- prompte NO-Bildung
   und
- NO-Bildung durch die Oxidation des atomar im Brennstoff enthaltenen Stickstoffes, das sogenannte Brennstoff NO beschrieben werden.

Der Hauptanteil der Stickoxide bei Feuerungen ist insbesondere bei Verwendung von stickstofffreien bzw. -armen Brennstoffen, wie gasförmigen Brennstoffen und Heizöl EL, auf thermisches NO, das bei Temperaturen oberhalb von 1200 ° C in der Flamme durch Oxidation des von der Luft mitgeführten molekularen Stickstoffes N₂ mit dem Sauerstoff entsteht, zurückzuführen. Das hier vorgeschlagene Verfahren beschreibt die Möglichkeit durch das Zurückführen eines Teilabgasstromes in den Verbrennungsprozeß insbesondere die Entstehung vom thermischen NO zu reduzieren. Das Prinzip dieser Minderungsmaßnahme ist bereits bekannt.

Durch das Zurückführen von Abgas in den Verbrennungsvorgang wird einerseits eine Reduktion der Flammentemperatur und andererseits eine Minderung des relativen Anteils des Sauerstoffes (Partialdruck des Sauerstoffes) erzielt.

Bei den bisher bekannten Verfahren dieser Art wird das zurückgeführte Abgas in die Saugseite oder Druckseite des Luftgebläses eingeführt und mit der Verbrennungsluft vermischt. Dadurch kommt es abhängig von der Abgasmenge zur Flammeninstabilität, und es wird vielfach das Verbrennungsverhalten erheblich beeinträchtigt bzw. die Entstehung anderer Schadstoffe, wie CO bzw. Ruß, begünstigt. Darüber hinaus können aufgrund von Kondensatbildung bzw. Verschmutzungserscheinungen Betriebsstörungen durch Beeinflussung der Flammenüberwachung entstehen.

Mit der Erfindung soll ein Verfahren und eine Feuerungsanlage zu dessen Durch-führung zur Verfügung gestellt werden, mit deren Hilfe die NOx-Reduzierung verbessert wird und die Bauteile des Brenners geschont werden.

Ausgehend von einem Verfahren der eingangs genannten Art bzw. einer Feuerungs-anlage mit den Merkmalen des Oberbegriffes des Anspruches 4 wird diese Aufgabe erfindungsgemäß dadurch gelöst, daß der Teilstrom des Abgases unter Umgehung des Brenners, dem Flammrohr derart zugeführt wird, daß es in die Flammenwurzel der Brennerflamme d.h. unmittelbar nach der Flammenbildung eintritt bzw. vorrichtungsgemäß derart, daß die Rückführung von außen im Flammrohr des Brenners mündet, wobei sie das Flammrohr derart durchbricht, daß das Abgas in die Flammenwurzel der Brennerflamme d.h. unmittelbar nach der Flammenbildung eintritt.

Das erfindungsgemäße Verfahren ist besonders geeignet, durch die Abgasrückführung die NOx-Werte wesentlich zu reduzieren, ohne die vorbeschriebenen Nachteile in Kauf nehmen zu müssen. Dabei ist besonders wichtig, daß der Abgasteilstrom nicht dem Luft-Brennstoff-Gemisch (beispielsweise im Bereich vor oder der Stauscheibe eines Brenners der in Rede stehenden Ar) zugeführt wird, sondern der Flamme, die sich stromabwärts gesehen hinter der Stauscheibe aufbaut (Flammen-wurzel). Würde man den Abgasteilstrom nämlich dem Luft-Brennstoff.Gemisch vor der Stauscheibe bzw. in deren Bereich zuführen, so wird die Flammenbildung gestört. Leitet man andererseits den Abgasteilstrom zu weit von der Flammenwurzel entfernt in die Flamme ein, so verringert sich der NOx-Minderungseffekt, weil die dort bereits vorhandene weite Ausdehnung der Flamme verhindert, daß der Abgasteilstrom weit genug in die Flamme selbst eindringen kann (FR-A-2 484 277; DE-A 29 16 252; DE-A 30 21 875).

Weiterbildungen und bevorzugte Ausführungen der Erfindung ergeben sich aus den Unteransprüchen.

Die Erfindung wird anhand des in der Zeichnung wiedergegebenen Ausführungsbeispieles nachstehend näher erläutert. Es zeigen:

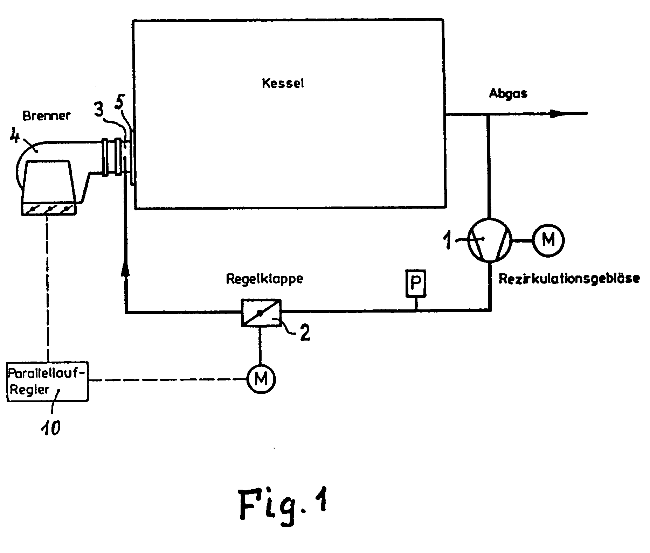

- Figur 1: ein Blockbild zur Erläuterung des Beispiels;

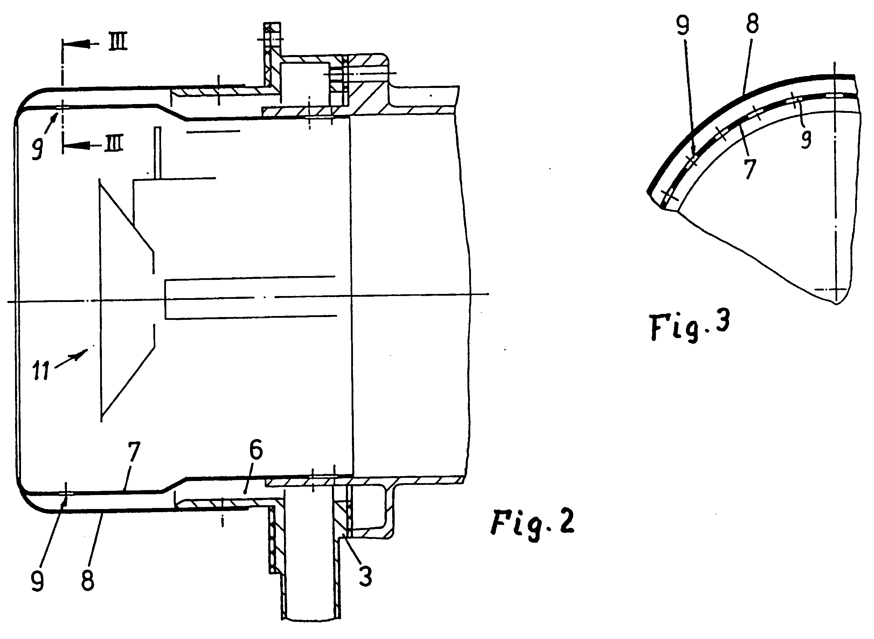

- Figur 2: einen Abschnitt eines Brennerkopfes nebst Flansch nach dem Beispiel im Längsschnitt;
- Figur 3: einen Teilschnitt nach der Linie III.III in Fig. 2.

Mit einem Rezirkulationsgebläse 1 wird ein Abgas-Teilstrom über eine Regelklappe 2 in einen Flansch 3 zwischen dem Brenner 4 und der Brenner-Montageplatte 5 am Kessel zugeführt. Das zurückgeführte Abgas gelangt von da aus in einen Ringraum 6, der durch das Flammrohr 7 des Brenners 4 und ein von dem Flansch 3 gehaltenes Überrohr 8 sowie eine Schrägfläche bzw. konusförmigen Wandung, mit der das Überrohr 8 an, seinem anderen Ende an dem Flammrohr 7 anliegt, begrenzt ist. Im vorderen Bereich des Flammrohres 7 sind über dem Umfang verteilt Bohrungen 9 angebracht, durch die das Abgas in die Flammenwurzel eingeleitet wird. Durch die dadurch bestimmte optimale Anordnung der Bohrungen nach Lage und Dimension bei einem entsprechenden Abgasdruck tritt das Abgas tief in die Flamme ein, ohne diese jedoch nachteilig zu beeinflussen.

Die zugeführte Abgasmenge wird in Abhängigkeit der Leistung über einen Parallelregler 10 mit Hilfe der Reglerklappe 2 gesteuert.

Bei 11 ist eine Einrichtung angedeutet, beispielsweise in Gestalt einer Stauscheibe, von der ab sich stromabwärts gesehen die Flamme bildet, so daß in der radialen Ebene, in der die Öffnungen liegen, die Flammenwurzel auftritt.

Durch diese Art der Zuführung wird die Mischungsaufbereitung von Brennstoff und Verbrennungsluft nicht beeinflußt. Das Abgas tritt in die Flamme, nachdem diese unmittelbar gebildet ist.

Gegenüber den bisher bekannten Abgasrückführungssystemen hat dieses Vorgehen folgende Vorteile:
1) Die Abgasmenge kann bei Vollast in großem Bereich von weit über 20 % der zugeführten Luftmenge aufgegeben werden, ohne daß es zu Flammeninstabilität führen kann. Bei Teillast kann sie bis 80 % der Verbrennungsluftmenge erhöht werden.
2) Das System ist an Feuerungen mit gasförmigen und flüssigen Brennstoffen anwendbar.
3) Das Verfahren kann ohne Nachteile an Zweistoffbrennern ohne zusätzliche Maßnahmen angewandt werden.
4) Das Verfahren ist einsetzbar sowohl an Brennern mit integrierten Luftgebläse (Monoblockbrennern) als auch an solchen mit separatem Luftgebläse (Duoblockbrennern).
5) Es treten keine Kondensations- bzw. Korrosionsprobleme an Brennerteilen und Gebläseteilen auf, da das Abgas mit diesen nicht in Berührung kommt.
6) Mit diesen Verfahren treten keine Verschmutzungserscheinungen an Brenneneilen und an der Flammenüberwachungs-Einrichtung auf.
7) Durch das Zurückführen des Abgases steigt der rauchgasseitige Widerstand im Kessel an, wodurch eine Leistungsminderung des Brenners zustande kommt. Diese Leistungsminderung fällt erheblich niedriger aus als bei bisher bekannten Verfahren. Bei üblichen Systemen muß neben der Überwindung des gestiegenen Widerstandes die Abgasmenge zusätzlich als Ballast vom Verbrennungsluflgebläse gefördert werden. Gleichzeitig steigt der Druckverlust im Brenner, der eine zusätzliche Leistungsminderung mit sich bringt.
8) Mit diesem System können auch die bereits in Betrieb befindlichen Anlagen relativ einfach nachgerüstet werden.

## Patentansprüche

1. Verfahren zur Reduzierung von Stickoxid-Werten (NOx-Werten) bei öl- oder gasbetriebenen Feuerungsanlagen durch Rückführen eines Teiles der Abgase in den Verbrennungsprozess unter Verwendung eines Rezirkulationsgebläses (1 ),
**dadurch gekennzeichnet**,
daß der Teilstrom des Abgases unter Umgehung des Brenners (4) dem Flammrohr derart zugeführt wird, daß es in die Flammenwurzel der Brennerflamme d.h. unmittelbar nach der Flammenbildung eintritt.

2. Verfahren nach Anspruch 1,
**dadurch gekennzeichnet**,
daß das Abgas der Flammenwurzel über den Umfang gleichmäßig verteilt zugeführt wird.

3. Verfahren nach Anspruch 1 oder 2,
**dadurch gekennzeichnet**,
daß die zugeführte Menge des Abgasteilstromes in Abhängigkeit von der Feuerungsleistung gesteuert wird.

4. Feuerungsanlage mit einem Öl- oder Gasbrenner (4), einem Kessel, einer Abgasleitung, einer Rückführleitung für einen Teilstrom des Abgases und einem in die Rückführleitung eingesetzten Rezirkulationsgebläse (1) zur Durchführung des Verfahrens nach einem der Ansprüche 1 bis 3,
**dadurch gekennzeichnet**,
daß die Rückführleitung von außen in Flammrohr (7) des Brenners (4) mündet wobei sie das Flammrohr (7) derart durchbricht, daß das Abgas in die Flammenwurzel der Brennerflamme d.h. unmittelbar nach der Flammenbildung eintritt.

5. Feuerungsanlage nach Anspruch 4,
**dadurch gekennzeichnet**,
daß die Rückführleitung einen zwischen dem Brenner (4) und einer Brenner-Montageplatte (5) angeordneten Flansch (3) durchtritt.

6. Feuerungsanlage nach Anspruch 4 oder 5,
**dadurch gekennzeichnet**,
daß die Rückführleitung einen Ringraum (6) aufweist, der zwischen dem Flammrohr (7) und einem Überrohr (8) sowie beidseitig axial begrenzt ausgebildet ist.

7. Feuerungsanlage nach Anspruch 6,
**dadurch gekennzeichnet**,
daß der Ringraum (6) zwischen dem Flammrohr (7) und dem Überrohr (8) an einem axialen Ende durch eine Wandung des Flansches (3), an dem das Überrohr (8) gehalten ist, und an dem entgegengesetzten axialen Ende durch eine Konuswandung begrenzt wird, mit der das Überrohr (8) an dem Flammrohr (7) anliegt.

8. Feuerungsanlage nach einem der Ansprüche 4 bis 7,
**dadurch gekennzeichnet**,
daß die Rückführleitung bzw. der Ringraum (6) in einer Vielzahl von in der Wandung des Flammrohres (7) vorgesehenen, über den Umfang gleichmäßig verteilten Bohrungen (9) mündet.

9. Feuerungsanlage nach einem der Ansprüche 4 bis 8,
**dadurch gekennzeichnet**,
daß in die Rückführleitung eine Regelklappe (2) eingesetzt ist, die mit einem die Abgasmenge in Abhängigkeit von der Feuerungsleistung bestimmenden Parallellaufregler (10) in Verbindung steht.

10. Feuerungsanlage nach Anspruch 9,
**dadurch gekennzeichnet**,
daß der Parallellaufregler (10) die Regelklappe (2) und die Luftzufuhr für den Brenner (4) steuernd ausgebildet ist.

## Claims

1. Method of reducing the nitric oxide levels (NOx-levels) in oil- or gas-burning furnaces by recycling some of the exhaust gas into the combustion process using a recirculating fan (1), **characterised** in that the partial current of exhaust gas is fed into the combustion pipe, avoiding the burner (4), so that it enters the base of the burner flame, i.e. directly at the location where the flame ist formed.

2. Method according to claim 1, **characterised** in that the exhaust gas is fed into the base of the flame in a uniformly distributed configuration around the periphery thereof.

3. Method according to claim 1 or 2, **characterised** in that the amount of exhaust gas current fed in is controlled in accordance with the output of the furnace.

4. Furnace having an oil or gas burner (4), a boiler, an exhaust gas pipe, a recycling pipe for reintroducing some of the exhaust gas and a recirculating fan (1) inserted in the recycling pipe for carrying out the method according to one of claims 1 to 3, **characterised** in that the recycling pipe opens into the combustion pipe (7) of the burner (4) from the outside, penetrating the combustion pipe (7) in such a way that the exhaust gas enters the base of the burner flame, i.e. directly at the location where the flame is formed.

5. Furnace according to claim 4, **characterised** in that the recycling pipe passes through a Range (3) arranged between the burner (4) and a burner mounting plate (5).

6. Furnace according to claim 4 or 5, **characterised** in that the recycling pipe has an annular space (6) which is formed between the combustion pipe (7) and a suction sleeve (8) and is axially bounded at both ends.

7. Furnace according to claim 6, **characterised** in that the annular space (6) between the combustion pipe (7) and the suction sleeve (8) is bounded, at one axial end, by a wall of the Range (3) on which the suction sleeve (8) is held and, at the opposite axial end, by a conical wall by means of which the suction sleeve (8) abuts on the combustion pipe (7).

8. Furnace according to one of claims 4 to 7, **characterised** in that the recycling pipe or the annular space (6) opens into a plurality of bores (9) uniformly distributed over the periphery of wall of the combustion pipe (7).

9. Furnace according to one of claims 4 to 8, **characterised** in that the recycling pipe contains a regulator valve (2) which is connected to a parallel flow regulator (10) which determines the amount of waste gas in accordance with the Output of the furnace.

10. Furnace according to claim 9, **characterised** in that the parallel flow regulator (10) is constructed so as to control the regulator valve (2) and the air supply to the burner (4).

## Revendications

1. Procédé pour la réduction de teneurs en oxydes d'azote (teneurs en NOx) dans des installations de combustion fonctionnant au fuel ou au gaz, par recyclage d'une partie des gaz rejetés dans le processus de combustion, avec utilisation d'une soufflante de recirculation (1), **caractérisé** en ca qua le courant partiel du gaz rejeté est envoyé au tube de flamme avec contournement du brûleur (4) de manière â entrer dans la base de la flamme du brûleur, c'est à dire directement an lieu où la flamme est formée.

2. Procédé selon la revendication 1, **caractérisé** en ca que le gaz rejeté est envoyé â la base de la flamme en étant réparti uniformément sur la périphérie.

3. Procédé selon la revendication i ou 2, **caractérisé** en ce que la quantité envoyée du courant partiel de gaz rejeté est réglée en fonction de la puissance du foyer.

4. Installation de combustion comportant un brûleur (4) à gaz ou à fuel, une chaudière, un conduit de gaz rejeté, un conduit de recyclage pour un courant partiel du gaz rejeté, et une soufflante de recirculation ii ) insérée dans le conduit de recyclage, pour la mise en oeuvre du procédé selon l'une quelconque des revendications 1 â 3, **caractérisée** en ce qua le conduit de recyclage débauche de l'extérieur dans le tube de flamme (7) du brûleur (4), en pénétrant dans le tube de flamme (7) de maniére que le gaz rejeté entre â la base de la flamme du brûleur, c'est à dire directement an lieu où la flamme est formée.

5. Installation de combustion selon la revendication 4, **caractérisée** en ce que le conduit de recyclage traverse une bride disposée entre le brûleur (4) et une plaque de montage (5) du brûleur.

6. Installation de combustion selon la revendication 4 ou 5, caractérisée an ca qua le conduit de recyclage comporte un espace annulaire (6) qui est formé entre le tube de flamme (7) et un tube supérieur (8), ainsi que Imité axialement des deux côtés.

7. Installation de combustion selon la revendication 6, **caractérisée** en ce que l'espace annulaire (6) entre le tube de flamme (7) et le tube supérieur (8) est limité â une extrémité axiale par une paroi de la bride (3) sur laquelle s'appuie le tube supérieur (8), et, à l'extrémité axiale opposée, par une paroi conique, avec laquelle le tube supérieur (8) est adjacent au tube de flamme (7).

8. Installation de combustion selon l'une quelconque des revendications 4 â 7, **caractérisée** en ce qua le conduit de recyclage ou l'espace annulaire (6) débauche dans une pluralité d'orifices (9) pratiqués dans la paroi du tube de flamme (7) et répartis uniformément sur la périphérie.

9. Installation de combustion selon l'une quelconque des revendications 4 â 8, **caractérisée** en ca qua, dans le conduit de recyclage, est inséré un clapet de recyclage (2) qui est en relation avec un régulateur parallèle (10) déterminant la quantité de gaz rejeté, en fonction de la puissance du foyer.

10. Installation de combustion selon la revendication 9, **caractérisée** en ce que le régulateur parallèle (10) est conçu pour commander le clapet de réglage (2) et l'arrivée d'air pour le brûleur (4).
